Europäisches Patentamt

European Patent Office

Office européen des brevets

(19)

(11) Veröffentlichungsnummer: **0 268 853**

**A1**

(12) # EUROPÄISCHE PATENTANMELDUNG

(21) Anmeldenummer: 87115725.1

(22) Anmeldetag: 27.10.87

(51) Int. Cl.⁴: **B01D 39/16** , A62B 23/00 , D04H 1/56 , A61F 9/02 , A41D 13/00

Die Bezeichnung der Erfindung wurde geändert (Richtlinien für die Prüfung im EPA, A-III, 7.3).

(30) Priorität: **12.11.86 DE 3638636**

(43) Veröffentlichungstag der Anmeldung:
**01.06.88 Patentblatt 88/22**

(84) Benannte Vertragsstaaten:
**AT BE CH DE ES FR GB GR IT LI LU NL SE**

(71) Anmelder: **Nowak, Gerd, Dr.**
**Weinbergstrasse 23**
**D-6940 Weinheim(DE)**

(72) Erfinder: **Nowak, Gerd, Dr.**
**Weinbergstrasse 23**
**D-6940 Weinheim(DE)**

(74) Vertreter: **Ratzel, Gerhard, Dr.**
**Seckenheimer Strasse 36a**
**D-6800 Mannheim 1(DE)**

(54) **Filter gegen Mikroorganismen und anorganische Feinstpartikel.**

(57) Die Erfindung betrifft einen Filter gegen Mikroorganismen und anorganische Feinstpartikel als Hauptbestandteil von aus Vliesträger, Filter und Vliesabdeckung bestehenden Gesichtsmasken, der dadurch gekennzeichnet ist, daß der Filter aus erkalteter, folienartiger und gasdurchlässiger Schmelze mit netzartig eingelagerten Fasern besteht.

Dabei können nach einer bevorzugten Ausführungsform die erkaltete Schmelze und die netzartig eingelagerten Fasern aus Alkylenvinylacetat bestehen.

Figur 13

EP 0 268 853 A1

## Filter gegen Mikroorganismen und anorganische Feinstpartikel als Hauptbestandteil von aus Vliesträger, Filter und Vliesabdeckung bestehenden Gesichtsmasken

Die Erfindung betrifft einen Filter gegen Mikroorganismen und anorganische Feinstpartikel als Hauptbestandteil von aus Vliesträger, Filter und Vliesabdeckung bestehenden Gesichtsmasken.

Der Schutz von Personen gegen organische und anorganische Krankheitserreger in der Luft, die von anderen Personen, Tieren, Pflanzen oder Emissionen stammen, gewinnt zunehmend an Bedeutung. Zu schützen sind insbesondere Patienten, Ärzte und Helfer in Kliniken ebenso wie Personen in Arzt-und zunehmend auch in Zahnarztpraxen oder auch Personen außerhalb der Praxen und Krankenhäuser in ihren Lebens-und Arbeitsbereichen, z. B. vor Grippe-Viren, Pollen, in der Luft - schwebende Feinstfasern und anderen Mikro-Partikeln.

Der Filter muß schädliche Teilchen aus der Luft herausfiltern und gleichzeitig genügend Luft hindurchlassen, um dem Träger der Maske ein ungehindertes Ein-und Ausatmen zu ermöglichen. Darüberhinaus muß er weitere Eigenschaften besitzen, die weiter unten beschrieben werden.

Es existieren sogenannte, mit Bakterienfiltern ausgestattete OP-Masken für Chirurgen und das Krankenhauspersonal, die aus dem gefalteten Bakterienfilter, einem oberen, in der Regel saugfähigen Einfaßband, einem unteren Einfaßband, zwei seitlichen Einfaßbändern, die in der Länge so ausgelegt sind, daß sie als Binde-Bänder zum Befestigen der Maske am Kopf des Trägers dienen, bestehen. Hinzu kommt der Nasenbügel zur Anpassung der Maske an das Gesicht des Trägers.

Der Filter selbst besteht aus einem Vliesstoff als Trägermaterial, dem eigentlichen Filtermedium und einem Vliesstoff als Abdeckmaterial. Er liegt in Falten. Sie werden beim Aufsetzen der Maske auseinandergezogen.

Der überwiegende Teil der zum Stand der Technik gehörenden Masken erfüllt bestimmte Funktionen unzureichend. Das gilt bei gegebener Filterwirkung für fehlende Dampfsperren zur Verhinderung des Beschlagens der Brillengläser der Maskenträger und weitere Kriterien. Die bekannten Bakterienfilter bestehen, von einer Ausnahme abgesehen, aus thermoplastischen Fasern, die mit aufwendigen kunststofftechnischen und aerodynamischen Apparaturen und hohem Materialeinsatz durch Extrusion einer aus Polypropylen bzw. Polyäthylen bestehenden Schmelze unter Verwendung des,hohe Temperaturen, Druck, d.h. Energie, erfordernden Verfahrens der Extrusion hergestellt werden. Bei diesen Filtern handelt es sich um sogenannte Spinn-Vliese.

Für die Filterwirkung und gleichzeitige Luftdurchlässigkeit des Filters ist u. a. der Durchmesser der Fasern von entscheidener Bedeutung. Die weitverbreiteten Filter werden aus 14 - 20 Mikron-Fasern hergestellt, siehe DE-AS 23 62 630.

Fasern mit geringeren Durchmessern von 0,5 bis 6 Mikron können zwar auch extruiert werden. Sie müssen jedoch zu Seilen zusammengefaßt bzw. mit wesentlich dickeren polymeren Fasern von 10-30 Mikron vermischt werden, da sie andernfalls zu einer dichten, luftundurchlässigen Folie verschmelzen, siehe DE-OS 16 16 473. Hinzu kommt, daß bei der Extrusion des Polypropylens nicht nur Fäden sodern in der Regel auch vergleichsweise dicke Tropfen entstehen, welche die Luftdurchlässigkeit des Filtermediums an den entsprechenden Stellen blockieren.

Die Folge davon ist, daß die bekannten, aus Fasern mit vergleichsweise großen Durchmessern bzw. "Seilen" bestehenden Filter, um ihre Funktionen zu erfüllen, vergleichsweise dick sein müssen und hohe Flächengewichte aufweisen von z. B. 47,6 bis 54,4 $g/m^2$ bzw. 64 $g/m^2$.

Anstelle von Polypropylen und Polyäthylen könnten theoretisch verwandte Polymere versponnen werden, wie z. B. Polyester, Polycarbonate oder auch fluorierte Polymere. Alle diese Komponenten haben sich für den speziellen Zweck als noch weniger geeignet erwiesen als Polypropylen und Polyäthylen. Sie werden daher in der Praxis nicht verwendet.

Neben den weitverbreiteten Spinn-Vlies-Filtern gibt es die oben angedeutete Ausnahme, die in der DE-OS 33 37 031 dargestellt wird. Das Besondere dieses Filters besteht darin, daß er aus einem Gelege von Fasern besteht, die aufgeladen sind. Die dadurch entstehenden elektrischen Felder sollen geladene und auch ungeladene Teilchen, z. B. Bakterien, an der Oberfläche des Abdeckmaterials binden. Die Fasern haben einen Durchmesser von in der Regel unter einem Mikron. Sie bestehen aus Polypropylen, Polyäthylen und ähnlichen Polymeren.

Der Hauptnachteil dieses Filters ist neben seiner aufwendigen Herstellung das, trotz Isolation durch die Träger-und Abdeckmaterialien, einsetzende Abklingen der Ladung im Zeitablauf und damit die nach wenigen Monaten eintretenden Wirkungsverluste.

Zunächst ist zusammenfassend festzustellen: Die bekannten Filter bestehen aus Polypropylen-Fasern der Stärke 0,5 bis kleiner als 6 Mikron (DE-OS 16 16 473), aus Polyäthylen der Stärke 10 - 30 Mikron (DE-PS 13 62 630) und aus spezifischen Elektreten, d.h. stark aufgeladenen Polypropylen- und Polyäthylen-Fasern einer Stärke von in der Regel unter einem Mikron. Die Herstellungsverfahren sind aufwendig, Material-und Energie-Verbrauch pro gegebener Filterfläche sind hoch.

Im übrigen haben alle bekannten Filter, von der Ausnahme abgesehen, siehe DE-PS 24 51 403, DE-PS 24 51 402, EP-A-O 081 943, den Nachteil, daß sie ein Aufsteigen der warmen feuchten Atemluft zu gegebenenfalls vorhandenen Brillengläsern des Maskenträgers nicht verhindern.

Verformbare Nasenbügel am oberen Maskenrand, dehnbare, elastische Bänder (siehe DE-OS 35 27 674), Verstärkungsrahmen und Dichtlippen (siehe DE-PS 29 38 720), Einfassungen des Maskenbandes mit saugfähigen Bändern oder offen- bzw. geschlossenzelligen Schaumstoffstreifen (siehe DE-OS 26 53 352; DE-GM 76 36 941) dichten zwar die Maske zu den Augen hin ab, sie verhindern jedoch nicht das Hindurchdringen der feuchten Atemluft durch den Filter bzw. die Maske auch in dem Bereich unterhalb der Augen und somit das unerwünschte Beschlagen der Brillengläser.

Der Erfindung liegt die Aufgabe zugrunde einen Filter der eingangs genannten Gattung zu - schaffen, der einen optimalen Schutz im Sinne der obigen Forderungen gewährleistet.

Insbesondere liegt der Erfindung die Aufgabe zugrunde, einen Filter mit hoher Bakterienfilterwirkung zu schaffen, wobei bei seiner Herstellung die Gasdurchlässigkeit des Filters steuerbar ist und gleichzeitig eine Herstellungsmöglichkeit des Filters mit einfachen und kostenfünstigen Mitteln ohne Verwendung eines Extruders geschaffen wird.

Diese Aufgabe wird bei einem Filter der eingangs genannten Gattung erfindungsgemäß dadurch gelöst, daß der Filter aus erkalteter, folienartiger und gasdurchlässiger Schmelze mit netzartig eingelagerten Fasern besteht.

Eine bevorzugte Ausführungsform ist ferner dadurch gekennzeichnet, daß die erkaltete Schmelze und die netzartig eingelagerten Fasern aus Alkylenvinylacetat bestehen.

Weitere bevorzugte Ausführungsformen sind in den Unteransprüchen dargelegt.

Die Erfindung betrifft also einen elastischen, hoch wirksamen aber gleichzeitig sehr luftdurchlässigen Feinstfilter, bestehend aus ungebundenen Fasern mit einem Durchmesser von durchschnittlich > 6 und < 10 Mikron. Diese Fasern bestehen aus Rohstoffen, die nach der neuen Erfindung zusammengesetzt sind, und nach einem bisher nicht bekannten vergleichsweise investitions-, energie-und materialsparenden Verfahren hergestellt werden. Bei den zur Herstellung des erfindungsgemäßen Filters eingesetzten Komponenten handelt es sich um groß-molekulare Co-Polymerisate aus Alkylenvinylacetaten, z. B. aus Polyvinylacetat und Butylenvinylacetat.

Diese neuen Formulierungen haben gegenüber den bisher verwendeten Komponenten und verwandten Polymeren im Hinblick auf den angestrebten Zweck entscheidende Vorteile. Die für die Schmelze erforderliche Massetemperatur ist rund 100°C niedriger als z. B. die von Polypropylen. Die Viskosität beträgt bei z. B. 160°C nur ca. 500 mPa.s und bei 175 °C sogar nur noch 300 mPa.s. (Polypropylen im allgemeinen bei 160°C ca. 1250 mPa.s., bei 175°C 900 mPa.s.). Daraus resultieren die für die Erfindung gegenüber allen anderen eingesetzten Komponenten wesentlich höheren Schergeschwindigkeiten. Dies bedeutet, daß die Aufspaltung der Schmelze zu Feinstfasern mit wesentlich geringerem Energieaufwand und ohne Einsatz eines Extruders gelingt.

Die Elemente der neuen Erfindung entsprechen dem US FDA Status (175.105). Sie sind in den Listen der Kunststoff-Kommission des Bundesgesundheitsministeriums enthalten. Sie sind insbesondere frei von Formaldehyd und physiologisch unbedenklich.

Die das Filtermedium umschließenden Faservliese (Träger-und Abdeckmaterial) sind seit langem allgemein bekannte stark poröse Längs-, Wirrfaseroder Naßvliese, die zur Filterwirkung so gut wie nichts beitragen aber auch den Luftwiderstand nicht signifikant erhöhen, wie im einzelnen in DE-AS 23 62 630 dargestellt ist.

Zur Herstellung des Filters wurde ein neues Verfahren entwickelt, daß auf einer eigens dafür konstruierten Anlage praktiziert wird. Zur Förderung der auf etwa 140° erwärmten Schmelze tritt an Stelle des Extruders eine einfache regelbare Zahnrad-oder Kolbenpumpe. Die Schmelze wird aus einem Schmelz-Behälter durch beheizbare Schläuche einem mit Nadelhubverstellung und elektronischer Regelung versehenem Sprüh-Auftragskopf zugeführt und mit leichtem Druck durch die Düse geführt. Die erfindungsgemäße Düse enthält neben der Öffnung für die Schmelze Luftkanäle bzw. Luftaustrittsöffnungen. Mit dem gesteuerten Luftstrom bei einem Druck von 1 - 9 bar wird der Schmelze-Strahl in Fasern von in der Regel > 6 und < 10 Mikron geteilt und netzförmig zu dem erfindungsgemäßen Filter abgelegt. Zahl, Form, Führung und Größe der Düsenöffnungen für die Schmelze sowie Zahl, Form, Führung der Luftkanäle in den Désen sind, neben anderen Parametern wie Druck und Temperatur, für die Fasern, insbesondere ihre Länge, Oberflächenbeschaffenheit und ihrem Durchmesser sowie für die Art ihrer Ablage, d.h. die Filterstruktur, von entscheidender Bedeutung.

Die Erfindung wird nun anhand von Zeichnungen, die besondere Ausführungsformen zeigen, weiterhin erläutert: Dabei zeigen:

Figur 1 eine Draufsicht auf die Gesichtsmaske;

Figur 2 einen Querschnitt durch den in Falten gelegten, aus drei Lagen bestehenden Filter;

Figur 3 den Außenmantel der erfindungsgemäßen Düse;

Figur 4 das Innere der Düse, mit Ausnahme des Düsenkörpers zur Aufnahme der Schmelze;

Figur 5 den in Figur 4 einzuführenden Düsenkörper zur Aufnahme, Führung und Abgabe der Schmelze;

Figur 6 einen vergrößerten Querschnitt durch den in Figur 5 beschriebenen Körper;

Figur 7 einen weiteren vergrößerten Querschnitt des in Figur 5 beschriebenen Körpers;

Figur 8 stark vergrößert den in Figur 5 bis Figur 7 einzusetzenden Austrittssieb-Körper;

Figur 9 eine Draufsicht auf das Innere der Düse, ähnlich wie in Figur 4;

Figur 10 einen vergrößerten Querschnitt durch das Äußere und das Innere der Düse einschließlich des in Figur 5 bis Figur 7, sowie Figur 8 dargestellten Düsenkörper, zur Aufnahme der Schmelze und Führung der Luftströme;

Figur 11 eine Draufsicht auf die Düse von unten, mit den Austrittsöffnungen der Luftkanäle und der Austrittsöffnung für die Schmelze;

Figur 12 eine 125fache Vergrößerung des Filtermediums;

Figur 13 eine Draufsicht auf die Gesichtsmaske, wie Figur 1, jedoch mit dem schraffiert dargestellten luftundurchlässigen Teil des Filtermediums, das bis an den oberen Rand der Maske reicht.

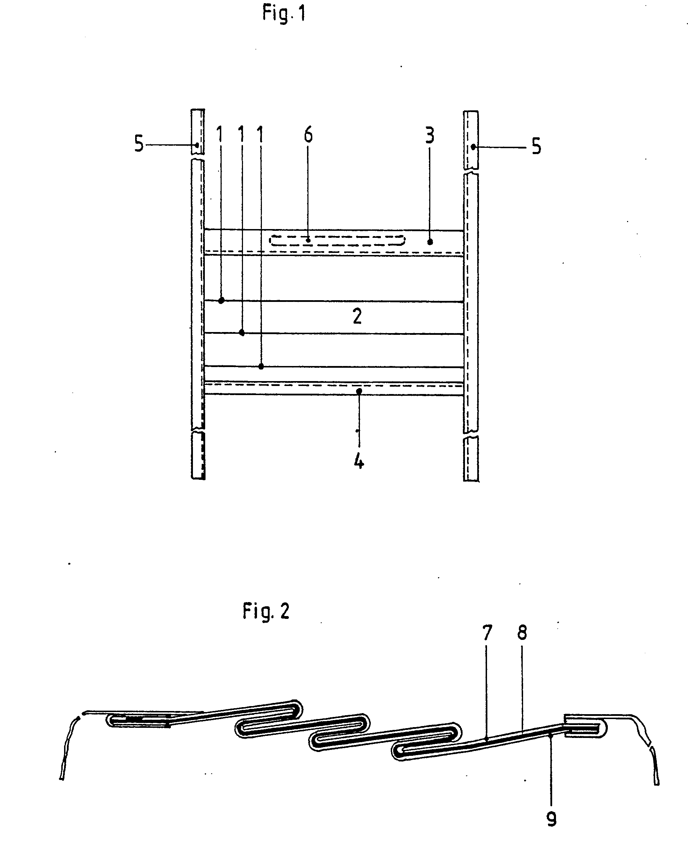

Figur 1 zeigt eine Draufsicht auf die Maske 1, zum Beispiel einer OP-Maske für Chirurgen, bestehend aus dem Bakterienfilter 2, einem oberen Einfaßband 3, einem unteren Einfaßband 4, zwei seitliche Einfaßbänder 5 und einem Nasenbügel 6.

Figur 2 zeigt einen Querschnitt durch den in Falten gelegten, aus drei Lagen bestehenden Filter. Der Filter besteht aus dem Trägermaterial 9, dem eigentlichen Filtermedium 8 und dem Abdeckmaterial 7.

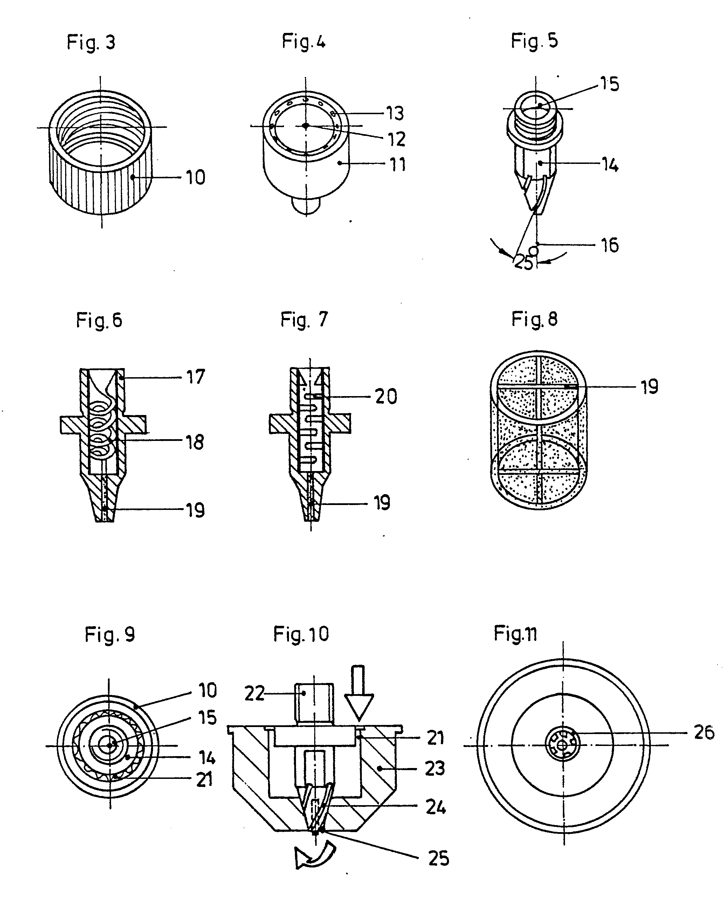

Figur 3 zeigt den Außenmantel 10 der erfindungsgemäßen Düse, mit dem Gewinde zum Aufnehmen des inneren Teils der Düse.

Figur 4 zeigt das Innere der Düse, mit Ausnahme des Düsenkörpers zur Aufnahme der Schmelze, bestehend aus der äußeren Begrenzung 11, der runden Öffnung für den eigentlichen Düsenkörper 12 und den Öffnungen zum Aufnehmen des Luftstromes (Zerstäuberluft) 13.

Figur 5 zeigt den in Figur 4 einzuführenden Düsenkörper zur Aufnahme, Führung und Abgabe der Schmelze, in seiner Längsformung 14, der Öffnung für die Aufnahme der Schmelze 15 und dem Winkel zwischen der gedachten Längsachse durch diesen Körper und einem Luftkanal.

Figur 6 zeigt einen vergrößerten Querschnitt durch den in Figur 5 beschriebenen Körper mit der Öffnung für die Schmelze 17, mit dem erfindungsgemäßen, spiralförmig angeordneten Führungsrohr 18 und der Austrittsöffnung für die Schmelze.

Figur 7 zeigt analog zu Figur 6 einen vergrößerten Querschnitt jedoch mit Umlenkstäben 20 für die Schmelze.

Figur 8 zeigt stark vergrößert den in Figur 5 bis 7 einzusetzenden Austrittssieb-Körper, mit den senkrecht zueinanderstehenden Wänden 19 zum Feinspalten des Schmelzestroms.

Figur 9 zeigt eine Draufsicht auf das Innere der Düse, ähnlich wie in Figur 4, mit dem äußeren Düsenring 10, einer Zwischenwand 14, der Austriffsöffnung für die Schmelze 15 und dem kreisförmig angeordneten Schlitz 21 zur Aufnahme der Zerstäuberluft.

Figur 10 zeigt einen vergrößerten Querschnitt durch das Äußere und das Innere der Düse einschließlich des in Figur 5 bis Figur 7, sowie Figur 8 dargestellten Düsenkörper, zur Aufnahme der Schmelze und Führung der Luftströme, mit dem Schraubengewinde zur Befestigung an den Auftragskopf 22, dem kreisförmig angeordneten Schlitz 21 zur Aufnahme der Zerstäuberluft, der Außenwandung 23, den Luftkanälen 24 und dem Austrittssiebkörper 25.

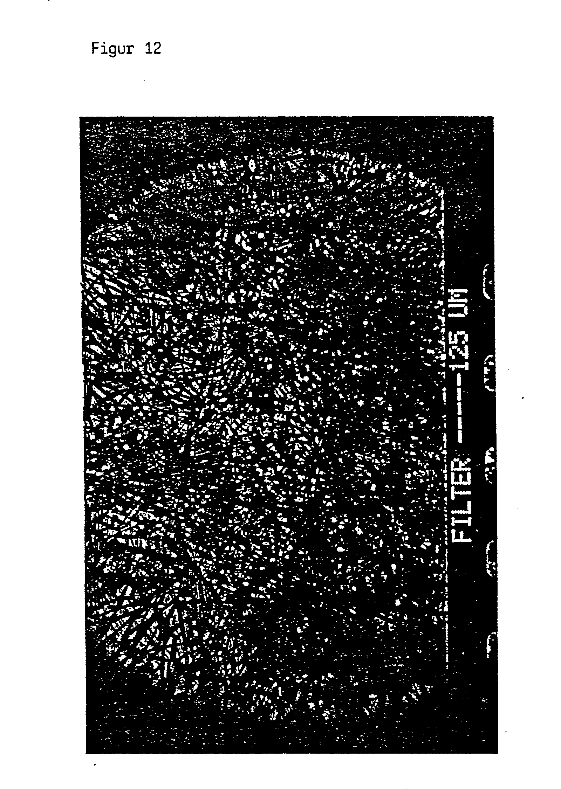

Figur 11 zeigt eine Draufsicht auf die Düse von unten, mit den Austrittsöffnungen der Luftkanäle und der Austrittsöffnung für die Schmelze, mit den Austrittsöffnungen der Luftkanäle.

Figur 12 zeigt eine 125fache Vergrößerung des Filtermediums.

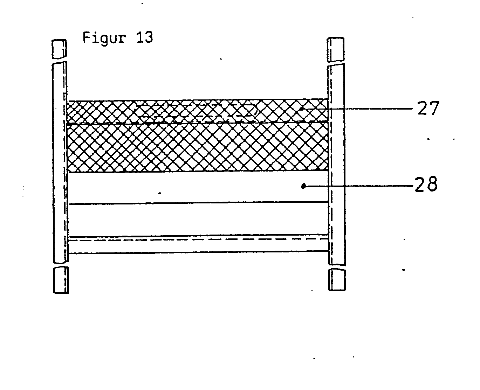

Figur 13 zeigt eine Draufsicht auf die Gesichtsmaske, wie Figur 1, jedoch mit dem schraffiert dargestellten luftunduchlässigen Teil des Filtermediums, das bis an den oberen Rand der Maske reicht. Darunter ist der luftdurchlässige Teil des Filters angeordnet 28.

Zur weiteren Erläuterung der Zeichnungen wird folgendes ausgeführt.

Figur 4 zeigt also das Innere der Düsen, das das Luftkanal-System 11, 12 und 13, die Öffnung für den einzusetzenden Schmelze-Düsenkörper 12 und die runden Öffnungen 13 bzw. alternativ den kreisförmigen Schlitz 21 zur Aufnahme der Zerstäuberluft enthält.

Figur 5 stellt also den Düsenkörper zur Aufnahme, Führung und Abgabe der Schmelze dar.

Von besonderer Relevanz ist das spiralförmig angeordnete Rohr von > 1,2 mm Durchmesser 18. Dieses Durchlaufelement verlängert den Weg der Schmelze von ihrem Eintritt in den Düsenkörper bis zum Austrittssieb-Körper 19 um ein Vielfaches, z. B. um das 40-fache. Durch die Verlängerung des Weges entsteht zusätzliche Reibung. Die Schmelze wird wärmer und noch dünnflüssiger, die Schergeschwindigkeit steigt weiter, gewisse Veränderungen im Verhalten der Groß-Moleküle treten ein. Ähnliche Wirkungen lassen sich durch die Umlenkstäbe 20 erzielen, die sich mit Hilfe eines Einsatzes in das Innere des Düsenkörpers einpassen lassen. Die Stäbe sind in der Regel 2 - 3 mm lang, 1 mm stark und rund,und im Inneren des Hohlkörpers angeordnet, siehe bitte Figur 7.

Die derart behandelte Schmelze fließt in den Austrittssieb-Körper ein, der in Figur 8 stark vergrößert dargestellt wird. In diesem Körper wird der Schmelze-Strahl vorzugsweise in vier Feinst-Strahlen aufgespalten und 2 - 4 mm zu den Austrittsöffnungen geführt.

Durch die in Figur 4 dargestellten runden Öffnungen bzw. den in Figur 9 und 10 gezeigten kreisförmig angeordneten Schlitz 21, wird mit einem Druck von 1-9 bar, vorzugsweise 2 - 3 bar, dem Kanal-System vorgewärmte Zerstäuberluft zugeführt.

Figur 10 zeigt also einen Querschnitt durch den Düsenkörper mit einem Punkt des Ringes 25, auf den der Düsenkörper (Figur 5) im Inneren des Gehäuses aufsetzt. In das untere Drittel der Außenwand, des sich zu den Austrittsöffnungen hin verjüngenden Düsenkörpers, sind spiralförmig von oben nach unten geführte Luftkanäle eingefräst, vorzugsweise mit einem Durchmesser von 1,1mm (24).

Diese Kanälenehmen die , z. B. durch den Schlitz 21, zuströmende Luft auf und führen sie spiralförmig den neben dem austretenden geteilten Schmelzestrahl angeordneten Luftaustrittsöffnungen 26 zu.

Das "Gefälle" der spiralförmigen Kanalführung ist für die Art der Zerstäubung von Bedeutung. Die Kanäle bilden mit der gedachten senkrechten Achse des Düsenkörpers einen spitzen Winkel von vorzugsweise 25°, Figur 5, 16 bzw. Figur 10, 24.

Der erfindungsgemäße Filter besteht aus Fasern, die einen Durchmesser von in der Regel > 6 und < 10 Mikron haben. Sie werden unmittelbar auf das Trägermaterial aufgesprüht und haften auf diesem. Filtermedium und die umschließenden Vliese müssen daher nicht noch durch Verschweißen an bestimmten Stellen miteinander verbunden werden, wie in DE-AS 23 62 630, beschrieben. Die Fasern verlaufen nicht parallel und senkrecht zur Strömungsrichtung wie bei den bekannten Filter, DE-AS 23 62 630 und DE-OS 16 16 473. Sie werden vielmehr netzförmig auf das Trägermaterial aufgesprüht (Figur 12, 125-fach vergrößert). Das Medium des erfindungsgemäßen Filters ist wesentlich dünner als die bekannten Medien und zwar 0,2 bis 0,4 mm statt 0,254 bis 0,51 mm bzw. 0,7 mm und es ist weicher, anschmiegsamer und leichter als die bekannten Filtermedien, d.h. 20-40 g/m² statt 47,6 bis 54,4 g/m².

Bei den überaus weichen Fasern ist ein unerwünschtes Austreten der Fasern durch die umschließenden Vliese unmöglich (vergleiche bitte DE-OS 33 37 031). Im übrigen ist das Porenvolumen, bei bekanntem Filter 85 % bzw. 87 %, für die Filterwirkung weniger relevant, als die Stärke der Fasern und die Struktur des Filters. Die Höchstzugkraft und Höchstzugkraftdehnung, die u.a. beim Auseinanderziehen der Maske vor dem Aufsetzen wichtig ist, um ein Reißen des Filters zu verhindern, beträgt beim erfindungsgemäßen Filter 2 bis 4 N, vorzugsweise um 3 N bzw. 4 bis 9 N, vorzugsweise um 7 N, gemessen in Anlehnung an DIN 53857, bei einer Streifenbreite von 50 mm und einer freien Einspannlänge von 100 mm. Die Zugkraft darf aber auch nicht wesentlich höher sein als angegeben, weil das zu einer unerwünschten Steifigkeit des Filters führt.

Zur eindeutigen Definition der Filterwirkung gehört u.a. die Bestimmung der Größe der herauszufilternden Partikel. Diese Angabe fehlt bei DE-OS 13 62 630 und DE-OS 16 16 473.

Der in Figur 12 dargestellte erfindungsgemäße Filter verfügt bei einer Partikelgröße von 3,4 Mikron über eine Wirkung von 70 bis 99,2 % bei Luftwiderständen von 0,5 bis 3,9 mm Wassersäule. Eine bevorzugte Ausführung weist eine Filterwirkung von 98 % bei einem Luftwiderstand von 2,5 bis 3,3 mm Wassersäule auf. In Bezug auf die Meßmethoden der Filterwirkung und des Luftwiderstandes wird auf die Darstellung in DE-AS 23 62 630 verwiesen.

Für Brillenträger besteht, wie bereits oben dargelegt, beim Tragen von Gesichtsmasken die Gefahr des Beschlagens der Brillengläser. Die ausgeatmete, warme und feuchte Atemluft kann sich an den Gläsern niederschlagen. Um das zu verhindern werden vielfältige Anstrengungen unternommen. Zunächst wird aus diesen, und aus anderen Gründen die Maske nach oben hin abgedichtet, insbesondere durch elastische Bänder (DE-OS 35 27 674), Dichtlippen (DE-PS 29 38 720), an Nase und Backenknochen anliegende Streifen aus zum Teil verformbarem Schaumstoffmaterial (DE-GM 76 36 941 bzw. DE-OS 26 53 352) und durch den seit langem von fast allen Maskenherstellern verwendeten innen-oder außenliegenden Nasenbügel.

Diese Maßnahmen verhindern nicht, daß etwa parallel zum oberen Rand der Maske und zwar durch den Filter, warme, feuchte Atemluft dringt, nach oben steigt und die Brillengläser beschlägt. Mit der Lösung dieses Problems setzt sich DE-PS 24 51 402 auseinander. Es wird ein blattförmiger, mit Schlitzen bzw. Klappen versehener Teil in der Regel parallel zum oberen Rand der Maske an der Maske befestigt, der die ausgeatmete Luft von den Brillengläsern weglenken soll. In DE-PS 24 51 403 wird ein luftundurchlässiger, blattförmiger Teil, ohne Schlitz und Klappen dargestellt, wobei dieser Hauptteil auf verschiedene Weise an verschiedenen Stellen der Maske befestigt wird und vorzugsweise aus Kunststoff-Folie, Faservlies oder Papier besteht.

Schließlich wird in EP-PS 0 081948 ein Filter beschrieben, der im oberen Bereich weniger Atemluft hindurchläßt als im unteren.

Die Erfindung betrifft also auch einen auf einfache Weise, das heißt arbeits-, material-und energiesparende Weise,herzustellenden Filter, der sowohl zur Filterung von Feinst-Partikeln bei gleichzeitig guter Luftdurchlässigkeit geeignet ist, als auch ein Beschlagen der Brillengläser mit dem Dampf der Atemluft verhindert. Dies wird dadurch erreicht, daß der erfindungsgemäße Filter nach einer bevorzugten Ausführungsform in einer bestimmten Zone 27 im allgemeinen parallel zur oberen Grenze der Maske in einer Breite von 5 bis 65 mm, vorzugsweise 25 bis 50 mm luftundurchlässig produziert wird. Figur 13, Fläche 27 zeigt die luftundurchlässige und Fläche 28 die luftdurchlässige Zone des Filters. Unter luftundurchlässig wird nicht die absolute Undurchlässigkeit verstanden sondern die Luftundurchlässigkeit bei gegebener Atemluftströmung und gegebenem Luftstau zwischen dem Gesicht und der Maske. Die Luftundurchlässigkeit in der oberen Zone des Filters wird erreicht, indem die Sprühdüse bzw. Sprühdüsen, die sich oberhalb des oberen Streifens des Filters befindet (befinden), während des Produktionsprozesses pro Zeiteinheit größere Mengen des erfindungsgemäßen Rohstoffes absprüht (absprühen), als die anderen Düsen oder anstelle der Fasern eine Schmelze abgibt (abgeben), die in ihrer Wirkung einer Kunst stoff-Folie gleich oder nahe kommt, oder eine Mischung aus Fasern und Schmelze abgibt (abgeben). In einen schmalen Bereich von 2 bis etwa 30 mm kann der Filter einen Streifen aufweisen, der nicht luftundurchlässig aber luftundurchlässiger ist als das eingentliche Filter.

Diese Durchführungsform der Erfindung besteht aus einem Stück und nicht aus einer Kombination des Filters mit Folien oder anderen Materialien. Die Maske bleibt elastisch, weich und anschmiegsam.

## Ansprüche

1. Filter gegen Mikroorganismen und anorganische Feinstpartikel als Hauptbestandteil von aus Vliesträger, Filter und Vliesabdeckung bestehenden Gesichtsmasken,
dadurch gekennzeichnet,
daß der Filter aus erkalteter, folienartiger und gasdurchlässiger Schmelze mit netzartig eingelagerten Fasern besteht.

2. Filter nach Anspruch 1,
dadurch gekennzeichnet,
daß die erkaltete Schmelze und die netzartig eingelagerten Fasern aus Alkylenvinylacetat bestehen.

3. Filter nach Anspruch 1 - 2,
dadurch gekennzeichnet,
daß die Fasern einen Durchmesser von > 6 bis < 1o Mikron besitzen.

4. Filter nach Anspruch 1 - 3,
dadurch gekennzeichnet,
daß das Filtermedium unmittelbar auf ein flächiges Trägermaterial aufgesprüht ist.

5. Filter nach Anspruch 1 - 4,
dadurch gekennzeichnet,
daß das Flächengewicht des Filtermediums 2o - 4o g/m² beträgt.

6. Filter nach Anspruch 1 - 5,
dadurch gekennzeichnet,
daß die Stärke des Filtermediums o,2 - o,4 mm beträgt.

7. Filter nach Anspruch 1 - 6,
dadurch gekennzeichnet,
daß die Höchstzugkraft des Filtermdiums 2 bis 4 Newton ( = 4 N) beträgt.

8. Filter nach Anspruch 1 - 7,
dadurch gekennzeichnet,
daß die Höchstzugkraftdehnung des Filtermediums 4 N bis 9 N beträgt.

9. Filter nach Anspruch 1 - 8,
dadurch gekennzeichnet,
daß die Herstellung des Filtermediums unter Einsparung von Energie, Rohstoff, Zeit und Investitionen verläuft, indem

a) an Stelle von Extrudern Pumpen eingesetzt werden,

b) die Prozesstemperaturen in der Regel 130° bis 180° betragen,

c) Düsen mit spiralförmigen Durchlaufelementen oder mit Umlenkstäben bzw. -flächen verwendet und

d) Düsen mit Austrittssiebkörpern eingesetzt werden.

10. Filter nach Anspruch 1 - 9,
dadurch gekennzeichnet,
daß er eine Dampfsperre zur Verhinderung des Beschlagens der Brillengläser des Maskenträgers aufweist, wobei das Trägermaterial im oberen Bereich in einer Breite von vorzugsweise 15 bis 50 mm mit Fasern beliebiger Durchmesser so stark besprüht ist, daß es luftundurchlässiger ist und/oder mit der Schmelze abgedeckt ist, während der untere verbleibende Bereich des Trägermaterials gleichzeitig so besprüht ist, daß die oben beschriebene Filterwirkung gewährleistet ist.

Fig. 1

5 — 1 1 1 6 3 — 5

2

4

Fig. 2

7 8

9

Fig. 3

Fig. 4

Fig. 5

Fig. 6

Fig. 7

Fig. 8

Fig. 9

Fig. 10

Fig. 11

Figur 12

Figur 13

27

28

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | EP-A-0 162 546 (MINNESOTA MINING AND MANUFACTURING) <br> * Zusammenfassung; Seite 3, Zeilen 16-30; Ansprüche 1,2,9; Figur 2 * <br> --- | 1,3 | B 01 D 39/16 <br> A 62 B 23/00 <br> D 04 H 1/56 <br> A 61 F 9/02 <br> A 41 D 13/00 |
| X | EP-A-0 164 739 (CHICOPEE) <br> * Zusammenfassung; Seite 2, Zeile 10 - Seite 3, Zeile 2; Seite 5, Zeilen 14-29; Seite 16, Zeile 22 - Seite 17, Zeile 19; Figur 2 * <br> --- | 1-3 | |
| X | US-A-3 802 429 (W.H. BIRD) <br> * Zusammenfassung; Spalte 2, Zeile 8 - Spalte 3, Zeile 5; Spalte 4, Zeilen 23-35; Anspruch 1 * <br> --- | 1,5,6 | |
| Y | EP-A-0 138 549 (MINNESOTA MINING AND MANUFACTURING) <br> * Zusammenfassung; Seite 6, Zeilen 17-19; Seite 6, Zeile 24 - Seite 7, Zeile 11 * <br> --- | 1,3 | |
| Y | US-E- 28 102 (D.J. MAYHEW) <br> * Zusammenfassung; Spalte 2, Zeile 47 - Spalte 4, Zeile 67; Figur 2 * <br> --- | 1,3 | RECHERCHIERTE SACHGEBIETE (Int. Cl.4) <br><br> B 01 D <br> A 62 B <br> A 41 D <br> D 04 H |
| A | EP-A-0 047 798 (C. FREUDENBERG) <br> * Zusammenfassung; Seite 1, Zeile 47 - Seite 2, Zeile 7; Ansprüche 1,5 * <br> --- | 1,3 | |
| A | US-A-4 588 630 (C.J. SHIMALLA) <br> * Zusammenfassung; Spalte 2, Zeile 36 - Spalte 3, Zeile 30 * <br> --- | 1-3 | |
| A | US-A-4 522 203 (A.T. MAYS) <br> * Zusammenfassung; Spalte 2, Zeile 66 - Spalte 5, Zeile 68; Ansprüche 1,3,7 * <br> ---          -/- | 1,2,5 | |

Der vorliegende Recherchenbericht wurde für alle Patentansprüche erstellt

| Recherchenort | Abschlußdatum der Recherche | Prüfer |
|---|---|---|
| DEN HAAG | 11-02-1988 | VAN IDDEKINGE R.E. |

# Europäisches Patentamt

## EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-2 234 008 (ESSO RESEARCH AND ENGINEERING) <br> * Seite 1, Zeile 1 - Seite 2, Zeile 7; Seite 5, Zeile 33 - Seite 6, Zeile 9; Seite 8, Zeilen 15-31 * <br> --- | 4,5,9 | |
| E | DE-U-8 630 309 (G. NOWAK) <br> * Insgesamt * <br> ----- | 1-10 | |

RECHERCHIERTE SACHGEBIETE (Int. Cl.4)

Der vorliegende Recherchenbericht wurde für alle Patentansprüche erstellt

| Recherchenort | Abschlußdatum der Recherche | Prüfer |
|---|---|---|
| DEN HAAG | 11-02-1988 | VAN IDDEKINGE R.E. |

EPO FORM 1503 03.82 (P0403)